# EUROPEAN PATENT SPECIFICATION

(11) **EP 1 162 256 B1**
(45) Date of publication and mention of the grant of the patent: **08.03.2006**
(21) Application number: 01112922.8
(22) Date of filing: 05.06.2001
(51) Int. Cl.: C11D 13/16, B30B 15/02, B29C 43/36

(54) **Molding apparatus for producing cakes of soap or the like**
Gussvorrichtung zur Herstellung von Seifenstücken oder dergleichen
Appareil de moulage pour la fabrication de pains de savon ou analogues

(30) Priority: 09.06.2000 IT MI001301
(43) Date of publication of application: 12.12.2001
(73) Proprietor: BINACCHI & C. s.r.l., I-21045 Gazzada Schianno (Varese) (IT)
(72) Inventor: Landoni, Ettore, 21048 Solbiate Olona (Varese) (IT)
(74) Representative: Modiano, Micaela Nadia

(56) References cited:
- DE-A- 19 748 370
- DE-C- 386 825
- FR-A- 1 427 027
- US-A- 3 142 863
- US-A- 5 087 188

## Description

The present invention relates to a molding apparatus for producing cakes of soap or the like.

The production of cakes of soap currently uses molding apparatuses which are generally constituted by a mold in which multiple molding half-cavities are placed aligned in a straight line; said mold can rotate on command intermittently about a substantially horizontal axis which is parallel to the direction in which the molding half-cavities of the mold are aligned.

Through the intermittent rotation of the mold about said axis, the mouths of the molding half-cavities, which are directed outward, are in turn made to face a counter-mold and a device for extracting the cakes of soap from the molding half-cavities of the mold.

More particularly, the counter-mold has a plurality of molding half-cavities which are mutually aligned so as to match the molding half-cavities formed in the mold. The molding half-cavities of the counter-mold are provided with a mouth which is directed toward the mold and the counter-mold can move on command toward or away from the mold in order to close the molding cavities, each of which is constituted by a half-cavity of the mold and by a half-cavity of the counter-mold, molding a bar of soap which is interposed between the mold and the counter-mold, or in order to open the molding cavity and allow the insertion of the bar of soap between the mold and the counter-mold or the rotation of the mold.

The extraction device of the cake of soap is generally constituted by a plurality of suckers, one for each molding half-cavity of the mold, which can move on command so as to engage, when the molding half-cavities of the mold face the suckers, the cakes of soap retained inside the molding half-cavities of the mold.

Generally, the mold has multiple rows of molding half-cavities which are mutually angularly spaced around the mold rotation axis, so that while one row of molding half-cavities faces the counter-mold, another row of molding half-cavities faces the suckers of the extraction device of the cake of soap in order to achieve high productivity.

Substantially, with the currently available molding apparatuses, the cakes of soap are molded by interposing a bar of soap to be molded between a row of molding half-cavities of the mold and the counter-mold, with said counter-mold being spaced with respect to the mold. The counter-mold is then moved toward the mold so as to mold the bar of soap inside the molding cavities constituted by the half-cavities formed in the mold and by the half-cavities formed in the counter-mold.

This molding operation generates soap waste which, after moving the counter-mold away from the mold, is retained on the mold around the mouth of the molding half-cavities and is attached to the cakes of soap, which are retained inside the molding half-cavities of the mold.

Then, by turning the mold through a preset angle about its rotation axis, the molded cakes of soap are made to face the suckers of the extraction device.

In order to achieve separation of the soap waste from the molded cakes of soap, the suckers, in their motion toward the mold, pass through appropriately provided shaped openings formed inside a mask which is interposed between the extraction device and the mold. The suckers then engage the cakes of soap and, by then moving away from the mold, extract the cakes of soap from the mold together with the waste. During movement away from the mold, the suckers again pass through the openings formed in the mask interposed between the extraction device and the mold, and since said openings are shaped so that only the cakes of soap can pass, the soap waste is separated and allowed to fall and is then recovered to be used to form new bars of soap to be molded.

These devices have drawbacks. The rotary actuation of the mold about a horizontal axis so that its molding half-cavities face in turn the counter-mold and the extraction device of cake of soap entails structural complication of the apparatus. Furthermore, during this rotation the cakes of soap can accidentally disengage from the half-cavities of the mold and be lost, thus reducing the actual productivity of the apparatus.

Another drawback is the waste separated from the cakes of soap by means of the movement of the suckers away from the mold. Said waste is bulky, and to be removed from the apparatus and disposed of, it has to be cut up which requires the use of additional devices.

FR-A-1427027 and DE-C-386825 disclose a molding apparatus for soap.

The aim of the present invention is to solve the above noted problems, by providing a molding apparatus for producing cakes of soap or the like which is structurally simpler than currently commercially available devices and can therefore be manufactured with lower costs.

Within this aim, an object of the invention is to provide a molding apparatus for producing cakes of soap or the like which considerably simplifies the separation and removal of the soap waste from the mold after molding, making said waste available in an already cut-up form, so that it can be handled and disposed of easily.

Another object of the invention is to provide a molding apparatus which effectively avoids the possibility of accidental separation of the cakes of soap from the mold after molding, thus preventing their fall and consequent damage.

Another object of the invention is to provide a molding apparatus for producing cakes of soap or the like which is highly reliable in operation and requires reduced maintenance interventions.

This aim and these and other objects which will become better apparent hereinafter are achieved by a molding apparatus for producing cakes of soap or the like, as defined in claim 1.
Further characteristics and advantages of the invention will become better apparent from the description of a preferred but not exclusive embodiment of the molding apparatus according to the invention, illustrated only by way of non-limitative example in the accompanying drawings, wherein:
Figure 1 is a schematic sectional view of the mold and counter-mold of the apparatus, taken along a vertical transverse plane, with the counter-mold spaced from the mold;
Figure 2 is a view of the mold and of the counter-mold of the apparatus according to the invention, with the counter-mold mated with the mold;
Figure 3 is a top plan view of the mold;
Figures 4 to 6 are schematic views of the molding of a cake of soap with the apparatus according to the invention, which is again shown in a cross-section taken along a transverse vertical plane.

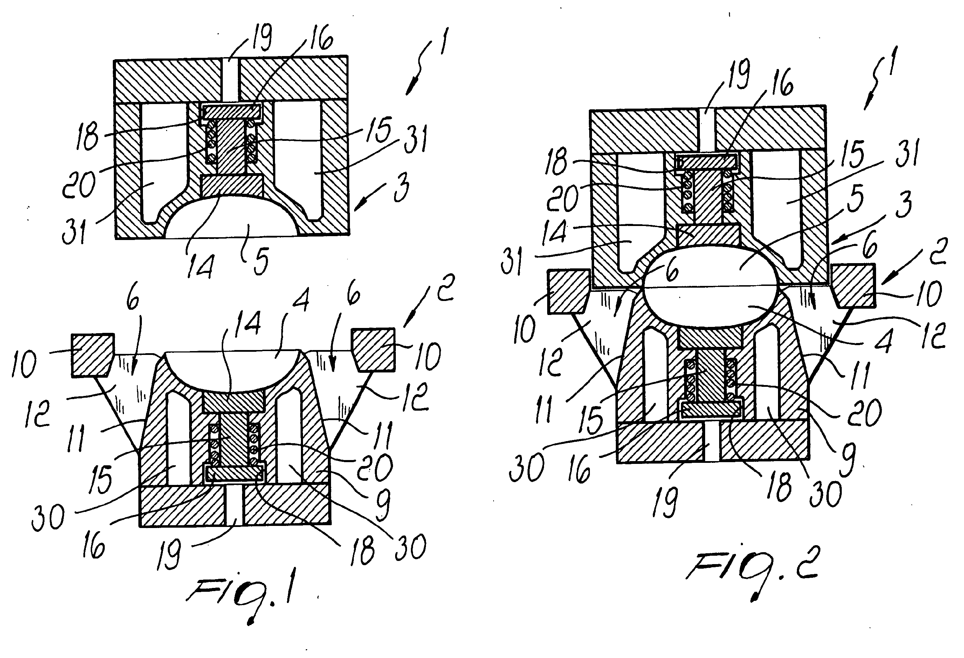

With reference to the above figures, the apparatus according to the invention, generally designated by the reference numeral 1, comprises a mold 2 which is faced by a complementary mold part or counter-mold 3 which is moveable on command, by way of known means, not shown for the sake of simplicity, toward or away from the mold 2.

Multiple molding half-cavities 4 are formed in the mold 2 and are preferably mutually aligned along a substantially horizontal direction.

Preferably, the mold 2 is meant to be rigidly floor-mounted or installed on an appropriate supporting structure so that the mouth of its half-cavities 4 is directed upward.

The counter-mold 3 is arranged above the mold 2, and multiple molding half-cavities 5 are formed inside it; said half-cavities are mutually aligned, so as to correspond to the half-cavities 4, along a substantially horizontal direction and have a mouth which is directed downward, i.e., faces the mouth of the half-cavities 4.

The number of half-cavities 4 and 5 formed in the mold 2 and in the counter-mold 3 can of course vary according to requirements.

According to the invention, around the mouth of the half-cavities 4 of the mold 2 there are compartments 6 for receiving and gradually removing the soap waste 7 produced by the molding of a piece of soap 8, preferably in bar form, which is interposed between the mold 2 and the counter-mold 3, as will become apparent hereinafter.

Conveniently, the compartments 6 are formed between the body 9 of the mold, in which the half-cavities 4 are formed, and a frame 10 which lies around the mouths of the half-cavities 4 and is associated with the mold body 9. Said compartments 6 are delimited by the sides 11 of the body 9 of the mold, which protrude downward from the mouth of the half-cavities 4, by the frame 10 and by wings 12 which connect the mold body 9 to the frame 10. In addition to supporting the frame 10, the wings 12 effectively cut the soap waste 7 produced by the mold of the piece of soap 8.

The frame 10 is arranged on a substantially horizontal plane, and its upper face is arranged at a higher level than the mouth of the half-cavities 4. The internal dimensions of the frame 10 are such to allow the lower end of the counter-mold 3 to enter the frame 10 in order to push the soap waste 7 into the compartments 6. In particular, the lower face of the counter-mold 3, on which the mouths of the half-cavities 5 open, is substantially flat and arranged on a horizontal plane; said lower face of the counter-mold 3, following the insertion of the lower end of the counter-mold 3 in the frame 10, is meant to rest on the upper side of the wings 12, which is also flat and horizontal, so as to gradually cut the soap waste 7 at said wings 12.

A separation element can be provided on the bottom of the half-cavities 4 of the mold 2 and can be constituted, in a per se known manner, by a portion 14 of said bottom which can move on command in a substantially vertical direction so as to pass from a lowered position, in which it is flush with the contiguous regions of said bottom of the half-cavities 4, to a raised position, in which it protrudes upward from the bottom of the half-cavities 4 so as to separate the cake of soap 13 present inside said half-cavity 4.

More particularly, the portion 14 is connected to, or formed monolithically with, the stem 15 of the piston 16 of a single-acting pneumatic cylinder which has a vertical axis and can be formed directly, as shown, inside the mold body 9. The single-acting pneumatic cylinder is constituted by a substantially cylindrical chamber 18 which has a vertical axis and is formed in the mold body 9 at each one of the half-cavities 4. Said chamber 18 accommodates the piston 16 so that it can slide axially and is connected, on one side of the piston 16, to a port 19 which can be connected to a pressurized air duct in order to produce the axial movement of the piston 16 along the chamber 18 in the direction that causes the transfer of the portion 14 from the lowered position to the raised position.

The chamber 18 accommodates, on the other side of the piston 16, a spring 20 which counteracts the axial movement of the piston 16 by means of the action of the compressed air, so as to return the portion 14 to the lowered position as soon as the connection of the port 19 to the compressed air duct ceases.

Each one of the molding half-cavities 5 formed in the counter-mold 3 also has a device for separating the cakes of soap 13 which can be provided exactly in the same manner as the separation device of the cake of soap provided for each one of the half-cavities 4. For this reason, the elements that constitute the device for separating the cakes of soap 13 which is arranged inside the counter-mold 3 have been designated by the same reference numerals used for the separation device of the cake of soap provided in the mold 2.

Conveniently, the sides 11 of the mold body 9 that protrude downward from the mouth of the half-cavities 4 are inclined so as to facilitate the sliding of the waste 7 inside the compartments 6.

Advantageously, inside the mold body 9 and/or inside the body of the counter-mold 3 ducts 30, 31 are provided for the circulation of a known type of coolant.

The operation of the molding apparatus according to the invention is as follows.

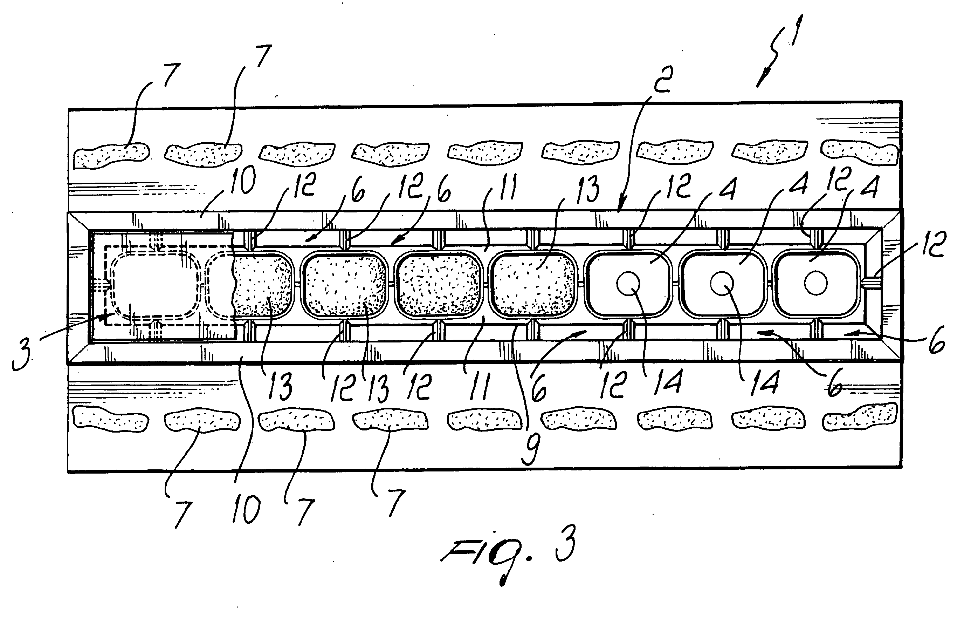

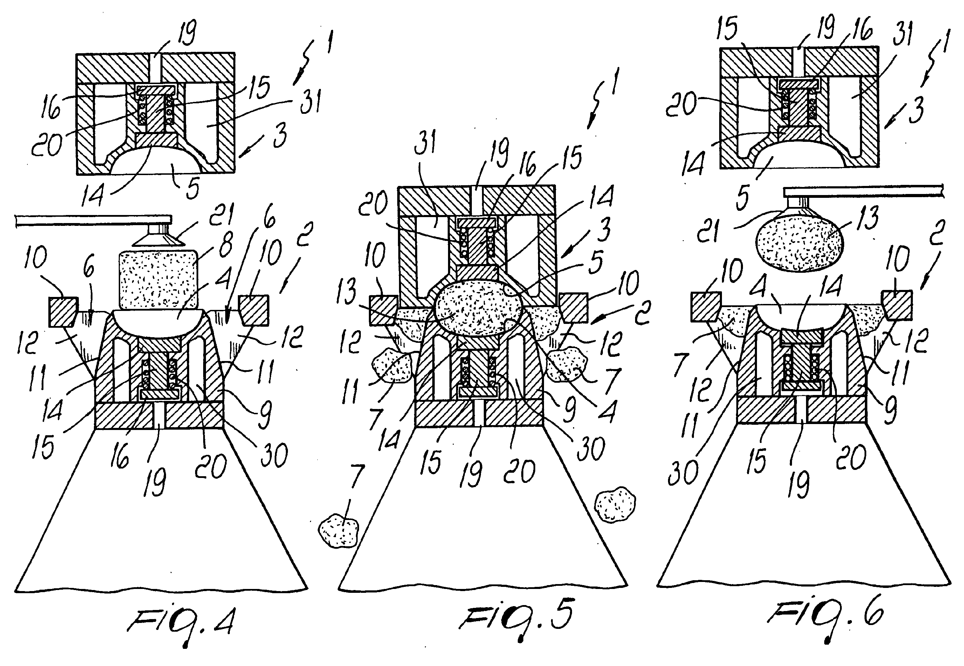

While the counter-mold 3 is spaced upward from the mold 2, a bar of soap 8 is arranged between the mold 2 and the counter-mold 3, as shown in Figure 4.

The counter-mold 3 is then lowered toward the mold 2 until the mouths of the half-cavities 5 mate with the mouths of the half-cavities 4 of the mold 2. In this manner the molding cavities, each constituted by a half-cavity 4 and a half-cavity 5, are closed, and the bar of soap 8 is molded into cakes of soap 13, one for each one of the molding cavities, as shown in Figure 5.

Upon molding, the excess amount of the bar of soap 8 generates soap waste 7 which is pushed into the compartments 6 by the downward movement of the counter-mold 3. As a consequence of the closure of the molding cavities, said waste 7 is separated directly from the cakes of soap 13 and is also cut up due to the cutting action produced by the resting of the lower face of the counter-mold 3 against the upper side of the wings 12.

The counter-mold 3 is then moved again upward and away from the mold 2, while the separation device of the cake of soap that is present inside the counter-mold 3 is activated so that the cakes of soap 13 are retained inside the half-cavities 4 of the mold 2. After moving the counter-mold 3 away above the mold 2, the cakes of soap 13 can be extracted from the half-cavities 4 of the mold 2 by means of suckers 21 or other extraction means of a known type which are inserted between the mold 2 and the counter-mold 3, as shown in Figure 6. During the extraction of the cakes of soap 13, the separation device of the cake of soap that is present in the mold 2 is activated so as to facilitate the extraction of the cakes of soap 13 from the half-cavities 4.

After the extraction and removal of the cakes of soap 13, a new bar of soap 8 is placed between the counter-mold 3 and the mold 2 and is then molded as already described.

The waste 7 produced by the molding operations gradually flows downward along the compartments 6 and can be recovered for subsequent reuse in forming a new bar of soap 8 to be molded.

It should be noted that since the waste 7 is already cut up, the operation for moving and disposing of the waste 7 is particularly simple and requires no additional devices for cutting it up.

In practice it has been found that the apparatus according to the invention fully achieves the intended aim, since by using a mold capable of moving away in each instance the waste generated by the molding operation, it is structurally simpler than conventional types of apparatus.

Another advantage of the apparatus according to the invention is that it obtains cakes of soap which have a better finish than those obtainable with conventional apparatuses, since the cakes of soap are separated from the waste during the molding operation instead of after it as occurs in conventional molding apparatuses.

Furthermore, the static arrangement of the mold in the apparatus according to the invention allows a further structural simplification which significantly reduces the production costs of the apparatus with respect to the production costs entailed by known types of molding apparatus.

The apparatus thus conceived is susceptible of numerous modifications and variations, all of which are within the scope of the appended claims.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A molding apparatus for producing cakes of soap or the like, comprising a mold (2) in which there is at least one molding half-cavity (4) and a counter-mold (3) in which there is correspondingly at least another molding half-cavity (5), said counter-mold (3) being movable on command toward or away from said mold (2) in order to close the molding cavity, which is constituted by said half-cavities (4, 5), molding a bar of soap (8) interposed between said mold and said counter-mold, or in order to open said molding cavity and allow the insertion of a bar of soap (8) between said mold (2) and said counter-mold (3) or the extraction of the molded cake of soap (13), compartments (6) for receiving and gradually removing the soap waste (7) produced by the molding of the bar of soap (8) being provided around the mouth of the molding half-cavity (4) of the mold (2) that is directed toward the counter-mold (3), said compartments (6) for receiving and removing the waste (7) being formed between the mold body (9), in which the molding half-cavities (4) are formed, and a frame (10) which is associated with the mold body (9) and extends around the mouths of the molding half-cavities (4) of the mold (2), said compartments (6) being delimited by the sides (11) of the mold body (9), by said frame (10) and by wings (12) for connecting the body (9) of the mold (2) to said frame (10); said connecting wings (12) being adapted to break up the soap waste (7), **characterized in that** the side of said counter-mold (3) that is directed toward said mold (2), when said counter-mold (3) is closed onto the mold (2), enters the mouth of said compartments between said frame (10) and the mold body (9) in order to push the waste (7) along said compartments (6).

2. The apparatus according to claim 1, **characterized in that** said mold (2) is adapted to be installed in a fixed position with the mouth of its half-cavity (4) directed upward.

3. The apparatus according to claims 1 and 2, **characterized in that** multiple molding half-cavities (4) are formed in said mold (2) and multiple molding half-cavities (5) which face the molding half-cavities (4) of said mold (2) are formed correspondingly in said counter-mold (3).

4. The apparatus according to claim 1, **characterized in that** the sides (11) of the body (9) of said mold (2) are inclined.

5. The apparatus according to claim 1, **characterized in that** the lower face of said counter-mold (3) that is directed toward said mold (2) is substantially flat and lies on a horizontal plane, said lower face of the counter-mold (3), when the counter-mold (3) is moved toward said mold (2) in the closure of said molding cavities (6), resting on the upper side of said connecting wings (12), which is also flat and arranged horizontally.

6. The apparatus according to one or more of the preceding claims, **characterized in that** ducts (30, 31) for the circulation of a cooling liquid are provided inside the body (9) of said mold (2) and/or inside the body of said counter-mold (3).

## Patentansprüche

1. Gussvorrichtung zur Herstellung von Seifenstücken oder dergleichen, umfassend eine Gussform (2), in welcher mindestens ein Guss-Halbhohlraum (4) vorhanden ist, und eine Gegengussform (3), in welcher dementsprechend mindestens ein anderer Guss-Halbhohlraum (5) vorhanden ist, wobei die Gegengussform (3) auf Kommando zu der Gussform (2) hin oder von ihr weg beweglich ist, um den Gusshohlraum, der von den Halbhohlräumen (4, 5) dargestellt wird, zu schließen, wobei ein zwischen die Gussform und die Gegengussform zwischengeschobenes Stück Seife (8) geformt wird, oder um den Gusshohlraum zu öffnen und das Einsetzen eines Stücks Seife (8) zwischen die Gussform (2) und die Gegengussform (3) oder das Herausnehmen des geformten Seitenstücks (13) zu erlauben, wobei Fächer (6) zur Aufnahme und allmählichen Entfernung von Seifenabfall (7), der durch das Formen des Stücks Seife (8) erzeugt wurde, um die Öffnung des Gusshalbhohlraums (4) der Gussform (2), die zur Gegengussform (3) hin gerichtet ist, vorgesehen sind, wobei die Fächer (6) zur Aufnahme und Entfernung des Abfalls (7) zwischen dem Gussformkörper (9), in welchem die Gusshalbhohlräume (4) gebildet sind, und einem Rahmen (10), der dem Gussformkörper (9) zugeordnet ist und sich um die Öffnungen der Gusshalbhohlräume (4) der Gussform (2) erstreckt, gebildet sind, wobei die Fächer (6) durch die Seiten (11) des Gussformkörpers (9), durch den Rahmen (10) und durch Flügel (12) zur Verbindung des Körpers (9) der Gussform (2) mit dem Rahmen (10) begrenzt werden; wobei die Verbindungsflügel (12) geeignet sind, den Seifenabfall (7) aufzubrechen,
**dadurch gekennzeichnet, dass**
die Seite der Gegengussform (3), die zur Gussform (2) hin gerichtet ist, wenn die Gegengussform (3) auf die Gussform (2) geschlossen ist, in die Öffnung der Fächer zwischen dem Rahmen (10) und dem Gussformkörper (9) tritt, um den Abfall (7) entlang der Fächer (6) zu schieben.

2. Vorrichtung nach Anspruch 1, **dadurch gekennzeichnet, dass** die Gussform geeignet ist, um in einer festen Position installiert zu werden, wobei die Öffnung ihres Halbhohlraums (4) nach oben gerichtet ist.

3. Vorrichtung nach Ansprüchen 1 und 2, **dadurch gekennzeichnet, dass** mehrere Gusshalbhohlräume (4) in der Gussform (2) gebildet sind und mehrere Gusshalbhohlräume (5), die den Gusshalbhohlräumen (4) der Gussform (2) zugewandt sind, dementsprechend in der Gegengussform (3) gebildet sind.

4. Verfahren nach Anspruch 1, **dadurch gekennzeichnet, dass** die Seiten (11) des Körpers (9) der Gussform (2) geneigt sind.

5. Verfahren nach Anspruch 1, **dadurch gekennzeichnet, dass** die untere Fläche der Gegengussform (3), die zur Gussform (2) hin gerichtet ist, im Wesentlichen flach ist und auf einer horizontalen Ebene liegt, wobei die untere Fläche der Gegengussform (3), wenn die Gegengussform (3) beim Schließen der Gusshohlräume (6) zur Gussform (2) bewegt wird, auf der oberen Seite der Verbindungsflügel (12) zu liegen kommt, welche ebenso flach und horizontal angeordnet ist.

6. Vorrichtung nach einem oder mehreren der vorangegangenen Ansprüche, **dadurch gekennzeichnet, dass** Leitungen (30, 31) für die Zirkulation einer Kühlflüssigkeit innerhalb des Körpers (9) der Gussform (2) und/oder innerhalb des Körpers der Gegengussform (3) vorgesehen sind.

## Revendications

1. Appareil de moulage pour produire des pains de savon ou analogues, comprenant un moule (2) dans lequel est prévue au moins une demi-cavité de moulage (4), et un contre-moule (3) dans lequel est prévue de façon correspondante au moins une autre demi-cavité de moulage (5), ledit contre-moule (3) étant déplaçable sur commande vers ou au loin dudit moule (2) de façon à fermer la cavité de moulage, qui est constituée par lesdites demi-cavités (4, 5), pour mouler une barre de savon (8) disposée entre ledit moule et ledit contre-moule, ou de façon à ouvrir ladite cavité de moulage et à permettre l'introduction d'une barre de savon (8) entre ledit moule (2) et ledit contre-moule (3) ou l'extraction du pain de savon moulé (13), des compartiments (6) pour recevoir et retirer progressivement les déchets de savon (7) produits par le moulage de la barre de savon (8) étant prévus autour de l'orifice d'entrée de la demi-cavité de moulage (4) du moule (2) qui est dirigé vers le contre-moule (3), lesdits compartiments (6) pour recevoir et retirer les déchets (7) étant formés entre le corps (9) du moule, dans lequel les demi-cavités (4) de moulage sont formées, et un bâti (10) qui est associé au corps (9) du moule et s'étend autour des orifices d'entrée des demi-cavités de moulage (4) du moule (2), lesdits compartiments (6) étant délimités par les côtés (11) du corps (9) du moule, par ledit bâti (10) et par des ailes (12) pour relier le corps (9) du moule (2) audit bâti (10) ; lesdites ailes de liaison (12) étant conçues pour briser les déchets (7) de savon,
**caractérisé en ce que** le côté dudit contre-moule (3) qui est dirigé vers ledit moule (2), quand ledit contre-moule (3) est fermé sur le moule (2), entre dans l'orifice d'entrée desdits compartiments entre ledit bâti (10) et ledit corps (9) du moule de façon à pousser les déchets (7) le long desdits compartiments (6).

2. Appareil selon la revendication 1,
**caractérisé en ce que** ledit moule (2) est conçu pour être installé dans une position fixe avec l'orifice d'entrée de sa demi-cavité (4) dirigé vers le haut.

3. Appareil selon les revendications 1 et 2,
**caractérisé en ce que** plusieurs demi-cavités de moulage (4) sont formées dans ledit moule (2) et plusieurs demi-cavités de moulage (5) qui font face aux demi-cavités de moulage (4) dudit moule (2) sont formées de façon correspondante dans ledit contre-moule (3).

4. Appareil selon la revendication 1,
**caractérisé en ce que** les côtés (11) du corps (9) dudit moule (2) sont inclinés.

5. Appareil selon la revendication 1,
**caractérisé en ce que** la face inférieure dudit contre-moule (3) qui est dirigée vers ledit moule (2) est sensiblement plate et s'étend sur un plan horizontal, ladite face inférieure du contre-moule (3), quand le contre-moule (3) est déplacé vers ledit moule (2) lors de la fermeture desdites cavités de moulage (6), reposant sur le côté supérieur desdites ailes de liaison (12), qui est également plat et agencé horizontalement.

6. Appareil selon une ou plusieurs des revendications précédentes,
**caractérisé en ce que** des conduits (30 ,31) pour la circulation d'un liquide de refroidissement sont prévus à l'intérieur du corps (9) dudit moule (2) et/ou à l'intérieur du corps dudit contre-moule (3).
